# EUROPEAN PATENT SPECIFICATION

(11) **EP 2 992 410 B1**
(45) Date of publication and mention of the grant of the patent: **03.04.2019**
(21) Application number: 14792180.3
(22) Date of filing: 28.04.2014
(51) Int. Cl.: G06F 3/048, B41J 29/00, B41J 29/42, G06F 3/0481, G06F 3/12, G06F 3/14, H04N 1/00, G06F 9/44

(54) **EQUIPMENT UNIT, INFORMATION PROCESSING TERMINAL, INFORMATION PROCESSING SYSTEM, DISPLAY CONTROL METHOD, AND PROGRAM**
AUSRÜSTUNGSEINHEIT, INFORMATIONSVERARBEITUNGSENDGERÄT, INFORMATIONSVERARBEITUNGSSYSTEM, ANZEIGESTEUERUNGSVERFAHREN UND PROGRAMM
UNITÉ D'ÉQUIPEMENT, TERMINAL DE TRAITEMENT D'INFORMATIONS, SYSTÈME DE TRAITEMENT D'INFORMATIONS, PROCÉDÉ DE COMMANDE D'AFFICHAGE ET PROGRAMME

(30) Priority: 02.05.2013 JP 2013096854
(43) Date of publication of application: 09.03.2016
(73) Proprietor: Ricoh Company, Ltd., Tokyo 143-8555 (JP)
(72) Inventor: ARAKI, Ryoji, Tokyo 143-8555 (JP); AKIYOSHI, Kunihiro, Tokyo 143-8555 (JP)
(74) Representative: White, Duncan Rohan
(86) International application number: PCT/JP2014/062290
(87) International publication number: WO 2014/178444

(56) References cited:
- WO-A1-2011/161966
- JP-A- 2002 062 961
- JP-A- 2012 164 070
- JP-A- 2013 021 673
- JP-A- 2013 074 457
- US-A1- 2011 119 713
- US-A1- 2011 153 729

## Description

### TECHNICAL FIELD

The present invention relates to equipment units, information processing terminals, information processing systems, display control methods, and programs.

### BACKGROUND ART

A user may voluntarily install application programs on an information processing terminal such as a smart phone, a tablet-type terminal, etc., to achieve functional enhancements, etc. Moreover, the above-mentioned information processing terminal can display a graphical user interface (GUI), which is rich in representations, and is also superior in the ease of use via a touch panel.

Thus, there exists a need to use such a GUI to improve the ease of use of an operation unit of an equipment unit.

US 2011/0153729A discloses a terminal apparatus such as a PC with a web browser communicating with a web browser of an MFP over a network. The terminal apparatus generates a control screen that emulates the control panel of the MFP. It therefore discloses equipment including: a first processing unit which provides a request for displaying a screen; a first communication unit which accepts the request and designates information identifying the screen to transmit a displaying request to the operation unit and a terminal that includes a second communication unit which receives the displaying request; and a second processing unit which causes the screen to be displayed in a form which is different from a form designated for the request accepted by the first communication unit.

The invention is in the system of claim 1, the terminal of claim 6, the method of claim 7 and the program of claim 8.

### BRIEF DESCRIPTION OF THE DRAWINGS

FIG. 1 is a diagram illustrating an exemplary configuration of an information processing system in an embodiment of the present invention;
FIG. 2 is a diagram illustrating an exemplary hardware configuration of an image forming apparatus in the embodiment of the present invention;
FIG. 3 is a diagram illustrating an exemplary hardware configuration of an information processing terminal in the embodiment of the present invention;
FIG. 4 is a diagram illustrating an exemplary functional configuration of the information processing system in the embodiment of the present invention;
FIG. 5 is a diagram for explaining a displaying mechanism in the information processing system;
FIG. 6 is a sequence diagram for explaining an example of processing procedures when an application is launched and when the application is stopped;
FIG. 7 is a diagram illustrating exemplary displaying of a home screen;
FIG. 8 is a sequence diagram for explaining one example of a processing procedure of a process for generating an operation screen in response to a launch of an SDK application;
FIG. 9 is a diagram illustrating exemplary displaying of the operation screen;
FIG. 10 is a sequence diagram for explaining one example of a processing procedure of a process executed in response to an operation of a display component in the operation screen;
FIG. 11 is a sequence diagram for explaining one example of a processing procedure executed in response to an action event;
FIG. 12 is a diagram illustrating exemplary changing in display statuses of the operation screen;
FIG. 13 is a sequence diagram for explaining an example of a processing procedure for causing a soft keyboard to be displayed;
FIG. 14 is a sequence diagram for explaining one example of a processing procedure executed in response to inputting of a character sequence; and
FIG. 15 is a sequence diagram for explaining one example of a processing procedure which is executed when a rich UI application requires a file resource saved in the image forming apparatus.

### MODE FOR CARRYING OUT THE INVENTION

The present inventor has investigated how the information processing terminal as described above may be caused to function as an operation unit of an equipment unit such as an image forming apparatus, etc. For example, making it possible to display an operation screen for various application programs which operate on the equipment unit on the information processing terminal is being investigated. As there are a large number of application programs being provided in the market, it is desirable to suppress the effect on these assets as much as possible to cause the information processing terminal to function as the operation unit for the equipment unit. Now, it is possible to cause the information processing terminal to emulate a conventional operation unit in the equipment unit.

However, for a simple emulation, it is difficult to enjoy the ease of use, etc., that may be obtained with the GUI included in the information processing terminal that is rich in representations. This is because the screen displayed by the emulation is merely a screen in accordance with display capabilities provided by the conventional operation unit. Therefore, in the simple emulation, there remains a possibility of the significance of causing the information processing terminal to function as the operation unit being ignored.

The embodiment of present invention makes it possible to improve the ease of use of the operation unit of the equipment unit.

Below, the embodiment of the present invention is explained based on the drawings.

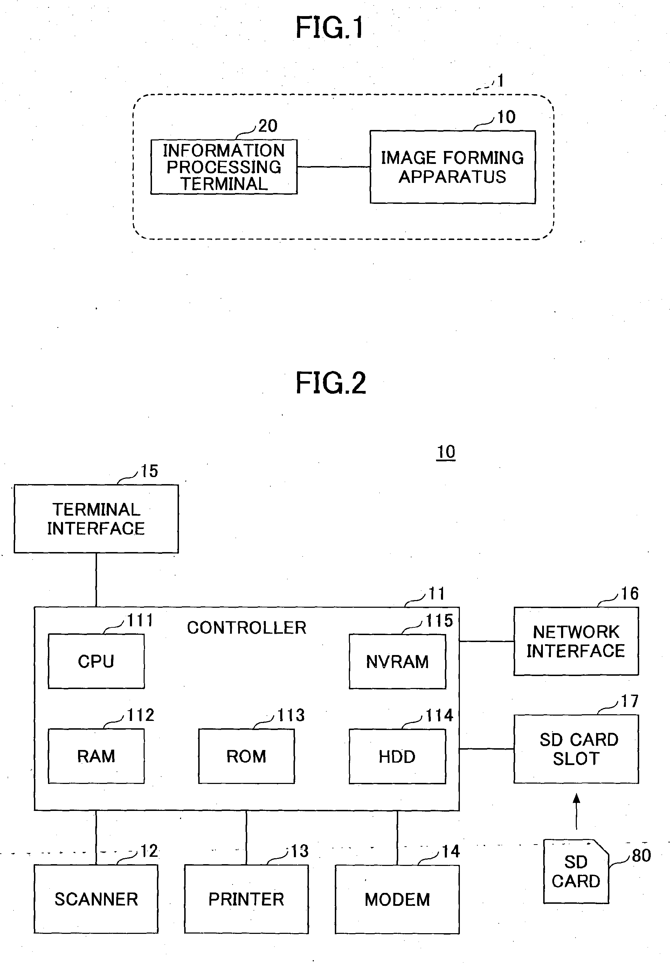

FIG. 1 is a diagram illustrating an exemplary configuration of an information processing system in an embodiment of the present invention. In an information processing system 1 shown in FIG. 1, an image forming apparatus 10 is communicatively connected to an information processing terminal 20. Communication between the image forming apparatus 10 and the information processing terminal 20 is conducted via a network such as a USB (Universal Serial Bus), short-range wireless communications, LAN (regardless of wired or wireless), etc., for example.

The image forming apparatus 10 is a multifunction peripheral in which two or more of a printer, scanner, copier, and facsimile transmission/reception functions are realized within one housing unit. An equipment unit having any one function may be used as the image forming apparatus 10. Moreover, the image forming apparatus 10 in the present embodiment is one example of the equipment unit, so that, instead of the image forming apparatus 10, an equipment unit such as a projector, a teleconferencing system, a digital camera, etc., may be used.

The information processing terminal 20 is an electronic equipment unit in which a complete information process can be executed alone, such as a smart phone, a tablet-type terminal, etc., for example. In the present embodiment, the information processing terminal 20 functions as an operation unit of the image forming apparatus 10. In more detail, the information processing terminal 20 is connected to the image forming apparatus 10, instead of to an operation panel which is conventionally provided as an operation unit dedicated to the image forming apparatus 10. Below, a simply reference to "the operation panel" means an operation panel provided in the conventional image forming apparatus 10.

The information processing terminal 20 is provided in such a manner that it is fixed at a predetermined position of the image forming apparatus 10 (for example, a position at which the operation panel is arranged). Therefore, the information processing terminal 20 and the image forming apparatus 10 may be grasped as one apparatus unit. Alternatively, the information processing terminal 20 may be removable (separable) from the image forming apparatus 10. When the information processing terminal 20 is removed, the information processing terminal 20 can function as an operation unit of the image forming apparatus 10 via wireless communications, etc., such as Bluetooth (registered trademark), infra-red rays, etc.

FIG. 2 is a diagram showing an exemplary hardware configuration of an image forming apparatus in the embodiment of the present invention. In FIG. 2, the image forming apparatus 10 includes hardware units such as a controller 11; a scanner 12; a printer 13; a modem 14; a terminal interface 15, a network interface 16, an SD card slot 17, etc.

The controller 11 includes a CPU 111, a RAM 112, a ROM 113, an HDD 114, an NVRAM 115, etc. In the ROM 113 are stored various programs and data, etc., for use by the programs. The RAM 112 is used as a storage area for loading the programs, a work area for the loaded programs, etc. The CPU 111 processes the programs loaded to the RAM 112 to realize various functions . In the HDD 114 are stored programs and various data, etc., for use by the programs. In the NVRAM 115 is stored various setting information, etc.

The scanner 12 is a hardware unit (an image reading unit) for reading image data from a manuscript. The printer 13 is a hardware unit (a printing unit) for printing of printing data onto a printing sheet. The modem 14, which is a hardware unit for connecting to a telephone line, is used to execute transmission and reception of image data via facsimile communications. The terminal interface 15 is an interface for communicating with (connecting to) the information processing terminal 20. For example, the terminal interface 15 may be a USB interface, or a hardware unit for short-range wireless communications, for example. Alternatively, the terminal interface 15 may be a hardware unit for connecting to a network (regardless of wired or wireless), such as the LAN, etc. The network interface 16 may be a hardware unit for connecting to the network (regardless of wired or wireless), such as the LAN, etc. The SD card slot 17 is used for reading programs stored in an SD card 80. In other words, in the image forming apparatus 10, not only the programs stored in the ROM 113, but also the programs stored in the SD card 80 may be loaded to the RAM 112 and executed thereat. The SD card 80 may be replaced by a different recording medium (a CD-ROM, a USB (Universal Serial Bus) memory, etc., for example) . In other words, the type of the recording medium that corresponds to the positioning of the SD card 80 is not limited to a predetermined one. In this case, the SD card slot 17 may be replaced by a hardware unit in accordance with the type of the recording medium.

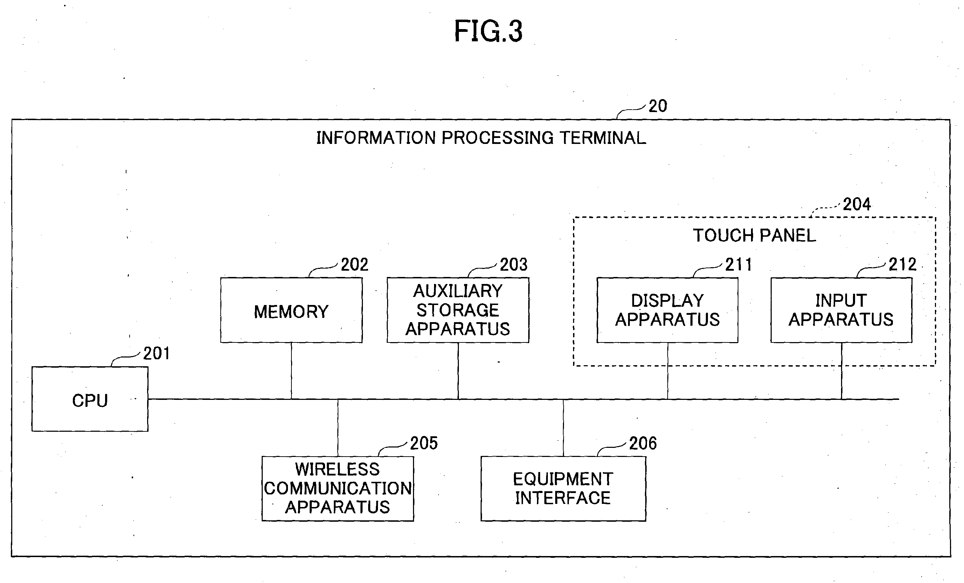

FIG. 3 is a diagram illustrating an exemplary hardware configuration of an information processing terminal in the embodiment of the present invention. In FIG. 3, the information processing terminal 20 includes a CPU 201, a memory 202, an auxiliary storage apparatus 203, a touch panel 204, a wireless communication apparatus 205, an equipment interface 206, etc.

The auxiliary storage apparatus 203 stores therein programs, etc., which are installed in the information processing terminal 20. If there is an instruction for launching the programs, the memory 202 reads the programs from the auxiliary storage apparatus 203 to store therein the read results. The CPU 201 realizes functions related to the information processing terminal 20 in accordance with the programs stored in the memory 202.

The touch panel 204 is an electronic component including both input and display functions, and displays information and accepts an input from a user. The touch panel 204 includes a display apparatus 211, an input apparatus 212, etc.

The display apparatus 211, which is a crystal display, etc., is responsible for the displaying function of the touch panel 204. The input apparatus 212 is an electronic component including a sensor which detects the contact of a contacting object with the display apparatus 211. Schemes for detecting the contact of the contacting object may be any of known schemes, such as an electrostatic scheme, a resistive film scheme, and an optical scheme, etc. The contacting object is an object which is in contact with a contacting face (surface) of the touch panel 204. One example of the above-mentioned object includes a finger of a user; a special or common pen, etc.

The wireless communication apparatus 205 is an electronic component such as an antenna, etc., that is required for conducting communications in a wireless LAN (Local Area Network), a mobile communications network, etc. The equipment interface 206 is an interface for communicating with the image forming apparatus 10. In other words, the equipment interface 206 conducts communications with the image forming apparatus 10 in accordance with a form corresponding to the terminal interface 15.

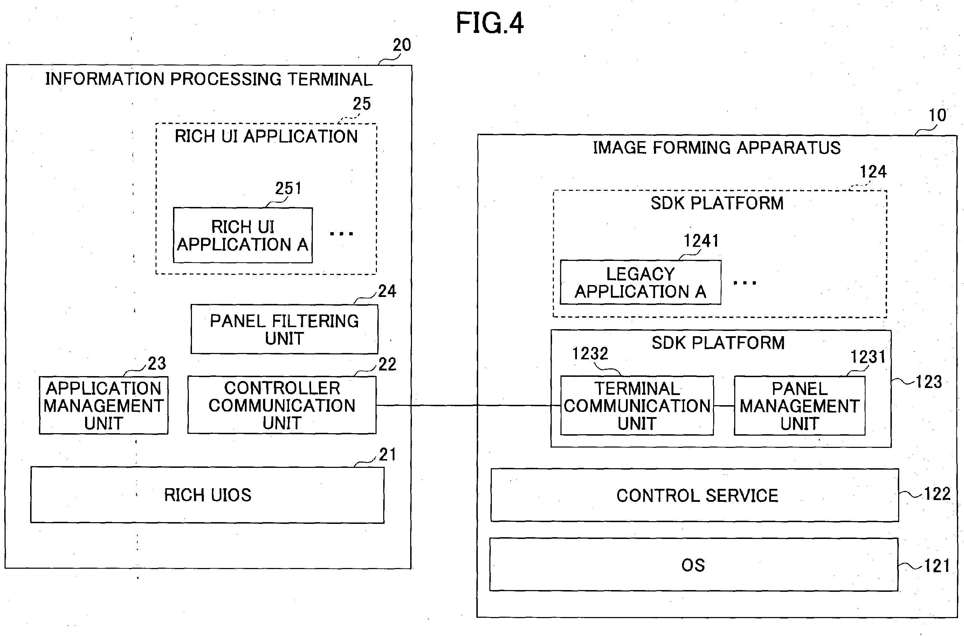

FIG. 4 is a diagram illustrating an exemplary functional configuration of an information processing system in an embodiment of the present invention. In FIG. 4, the image forming apparatus 10 includes an OS 121, a control service 122, an SDK platform 123, an SDK application 124, etc.

The OS 121 is a so-called OS (Operating System) . The respective software units on the image forming apparatus 10 operate as a process or a thread on the OS 121.

The control service 122, which includes functions for controlling various hardware resources, etc., is a group of software modules that provide an interface for allowing the functions to be used by upper-level applications, etc. The control service 122 includes, for example, a function related to network communications, a function for controlling the scanner 12, a function for controlling the printer 13, a function for managing memories (the RAM 112, the ROM 113, the NVRAM 115, etc.) . Moreover, the control service 122 also includes a function for controlling the operation panel.

The SDK platform 123 provides an execution environment for the SDK application 124 in addition to an API (Application program interface) for developing the SDK application 124. The form of the API may be a function, an object-oriented class and class method, etc., for example. Below, the API provided by the SDK platform 123 is called an "SDKAPI". For example, the SDK platform 123 provides the SDKAPI on a scanning function; the SDKAPI on the printing function, the SDKAPI on the copying function, etc., to the SDK application 124. The SDKAPI is published, so that the SDK application 124 may be developed by a third-party vendor, etc. The SDK platform 123 may include a Java (registered trademark) VM (Virtual Machine). In this case, the SDK application 124 is implemented by a JAVA (registered trademark) language.

While the SDK application 124, the SDK platform 123, etc., are exemplified, for convenience, as programs which can be installed in the image forming apparatus 10, the programs which can be installed in the image forming apparatus 10 are not limited to the SDK application 124, the SDK platform 123, etc. Programs other than the SDK application 124 and the SDK platform 123, etc., may be installed in the image forming apparatus 10, so that programs, in general, which are installed in the image forming apparatus 10, may be included as the programs which can be installed in the image forming apparatus 10.

In FIG. 4, the SDK platform 123 includes a panel management unit 1231, a terminal communication unit 1232, etc. The panel management unit 1231 has display control of the operation panel as the primary responsibility. In other words, the panel management unit 1231, which provides an SDKAPI (below called "an SDK panel API") related to the display control of the operation panel, performs the display control of the operation panel in response to calling of the SDK panel API. For example, the panel management unit 1231 transmits a request for changing a display status of a display component from the SDK application 124 to the control service 122. As a result, the display status of the display component is changed in the operation panel by the control service 122. Changing of the display status of the display component includes displaying and non-displaying of the display component, reversing of the display component, etc.

The panel management unit 1231 according to the present embodiment executes a process for causing changes in the display status in response to the request for display control of the operation panel to be reflected in the information processing terminal 20. For example, the panel management unit 1231 transmits a request for changing a display status of a display component from the SDK application 124 to the information processing terminal 20 via the terminal communication unit 1232. As a result, the display control by the SDK application 124 may be caused to be aligned or synchronized with the display control by the Rich UI application 25 in the information processing terminal 20.

The display components refer to various components to be constituting elements of a screen. For example, the display component is displayed for causing the image forming apparatus 10 to execute a process (a job). One example of the display component includes a button, a soft key, a soft keyboard, a window, a label for causing a character sequence to be displayed, etc. The soft key is a group of software keys which are displayed for accepting inputs of a character sequence in a smart phone, a tablet-type terminal, etc.

The terminal communication unit 1232 controls communications with the information processing terminal 20. The terminal communication unit 1232 communicates with the information processing terminal 20 via an HTTP (HyperText transfer protocol), for example. The communications protocol used between the image forming apparatus 10 and the information processing terminal 20 may not be limited to the HTTP.

The SDK application 124 is an application program (or a plug-in) which is additionally installed after shipment of the image forming apparatus 10 in order to achieve a functional enhancement of the image forming apparatus 10. In FIG. 4, a legacy application A 1241 is exemplified as an SDK application 124. The legacy application A 1241 requests displaying of an operation screen to the panel management unit 1231 and executes a predetermined process in accordance with the input to the operation screen. The term "legacy" in the legacy application A 1241 is added, for convenience, as an expression relative to a below-described rich UI application 25, and is not a language whose purpose is to limit the function and the use, etc., of the legacy application A 1241.

On the other hand, the information processing terminal 20 includes a Rich UIOS 21; a controller communication unit 22; an application management unit 23; a panel filtering unit 24; a rich UI application 25, etc.

The Rich UIOS 21 is an OS (Operating system) which is superior in the ease of use and which can provide a GUI (Graphical user interface), which is rich in representations. For example, the rich UIOS 21 may be an OS which is used in the smart phone and the tablet-type terminal, etc., in recent years.

The controller communication unit 22 controls communications with the terminal communication unit 1232 of the image forming apparatus 10. The application management unit 23 performs management, etc., of a corresponding relationship between the rich UI application 25 and the SDK application 124.

The panel filtering unit 24 provides an interface for aligning or synchronizing the display control between the rich UI application 25 and the SDK application 124 to the rich UI application 25.

The rich UI application 25 is an application program installed in the information processing terminal 20 to reflect the display control on the operation panel by the SDK application 124 to the information processing terminal 20. Basically, there is a 1 to 1 relationship between the rich UI application 25 and the SDK application 124. For example, a rich UI application which is exemplified in FIG. 4 is the rich UI application 25 for realizing the GUI of the legacy application A 1241 on the rich UIOS 21.

The term "rich" in the rich UIOS 21 and the rich UI application 25 is added, for convenience, as an expression relative to the legacy application A 1241, and is not a language whose spirit is to limit the function, the use, etc., of the rich UIOS 21 and the rich UI application 25.

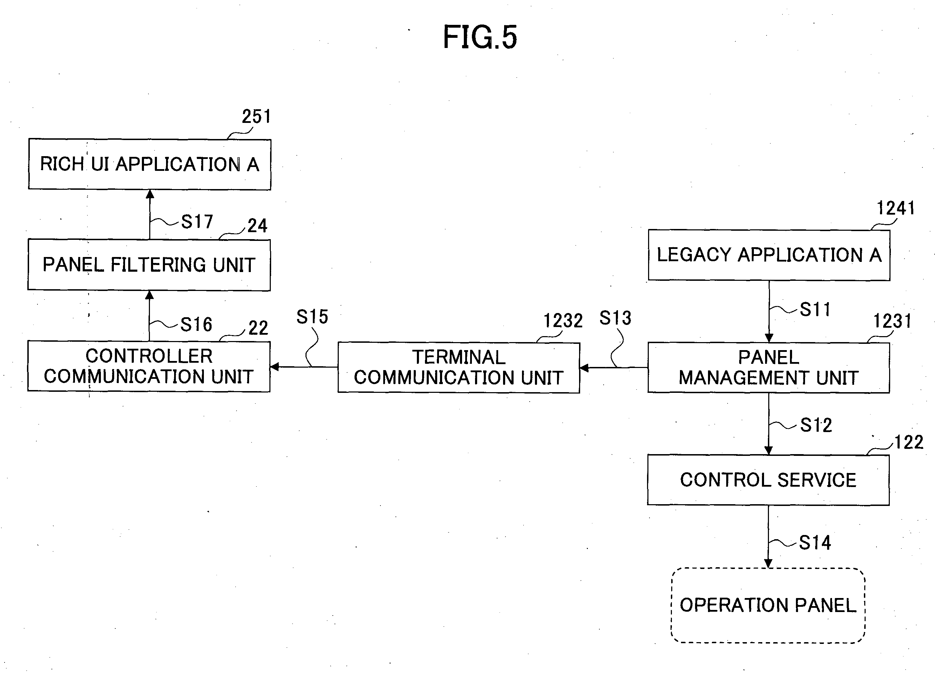

Next, a display mechanism in the information processing system 1 is described in further detail. FIG. 5 is a diagram for explaining the display mechanism in the information processing system.

When the legacy application A 1241 requests the panel management unit 1231 to generate some display component (below called "a display component A") (S11), the panel management unit 1231 requests generating (displaying) of the display component A to the control service 122 as in a conventional manner (S12) and requests the terminal communication unit 1232 to report that the display component A was generated (S13).

In response to the request for generating the display component A, the control service 122 generates the display component A in the same manner as when the operation panel was provided (S14) . No operation panels really exist, so that displaying of the display component A generated is not performed.

In the meantime, the terminal communication unit 1232 transmits a report on generation of the display component A to the controller communication unit 22 (S15). The controller communication unit 22 reports the generation of the display component A to the panel filtering unit 24 (S16). The panel filtering unit 24 reports the generation request to the rich UI application A 251 (S17). The rich UI application A 251 generates the display component A. The generated display component A is displayed on the touch panel 204. What display component the rich UI application A 251 generates "the display component A" as depends on the implementation of the rich UI application A 251. For example, even when "the display component A" is a button for the legacy application A 1241, the rich UI application A 251 may generate "the display component A" as a different display component which can be represented on the rich UIOS 21. In other words, the rich UI application A 251 may generate a form (type) of display component which is different from a form (type) of display component that was designated when the legacy application A 1241 requested the generation by the panel management unit 1231. In this way, unlike a simple emulator, building of a GUI which makes free use of representation capabilities in the rich UIOS 21 can be realized.

As evident from FIG. 5, most of the impact due to the replacement of the information processing terminal 20 by the operation panel is absorbed in the SDK platform 123 and the control service 122. Therefore, the necessity of altering the source code of the SDK application 124, which is an existing asset, may be reduced.

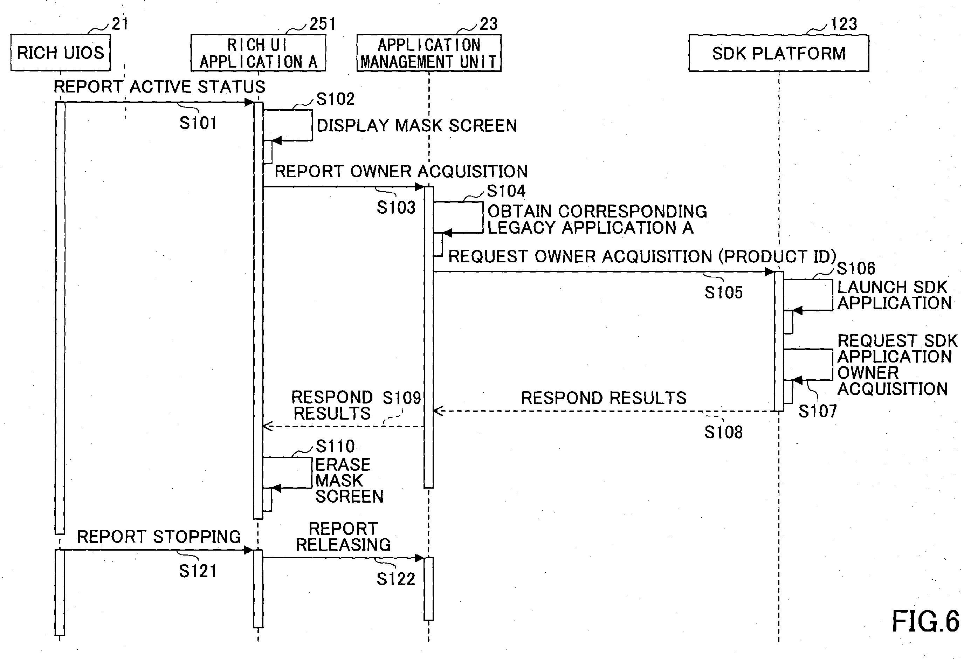

Below, a processing procedure executed by the information processing system 1 is described. FIG. 6 is a sequence diagram for explaining an example of processing procedures when an application is launched and when the application is stopped.

For example, in a home screen (an initial screen) which is displayed on the touch panel 204 of the information processing terminal 20, when an icon of the rich UI application A 251 is touched, the rich UIOS 21 reports the active status to the rich UI application A 251 which corresponds to the icon selected (S101). The active status refers to a status is secured of being in full possession of the display area of the screen as an operation object.

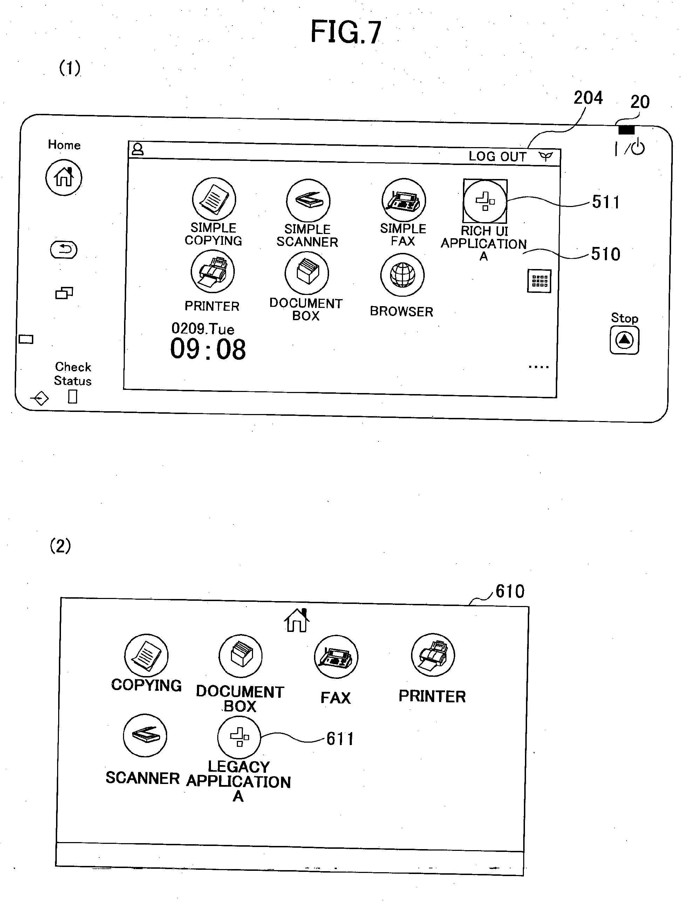

FIG. 7 is a diagram for illustrating exemplary displaying of a home screen. FIG. 7, in (1), shows exemplary displaying of a home screen 51 in the touch panel 204 of the information processing terminal 20. Moreover, FIG. 7, in (2) shows, just for reference, an example of a home screen 610 which is virtually generated in the image forming apparatus 10.

For example, in the touch panel 204, when an icon 511 is selected, step S101 is executed. The icon 511 corresponds to an icon 611 of the home screen 610.

Then, the rich UI application A 251 causes a mask screen to be displayed on the touch panel 204 (S102). The mask screen is a screen which is displayed in order to make it possible to control the visualization timing of the operation screen displayed on the touch panel 204 by concealing the operation screen in response to a request from the SDK application 124 by a mechanism described in FIG. 5. For example, a message such as "please wait a while", etc., may be displayed on the mask screen.

Then, the rich UI application A 251 designates an application ID of the rich UI application A 251 to report the owner acquisition to the application management unit 23 (S103). The application ID is identifying information for each rich UI application 25. Moreover, the owner acquisition refers to acquiring the status as an owner (a possessor) of the display area of the screen and is almost synonymous with becoming active.

Then, the application management unit 23 determines a product ID of the SDK application 124 corresponding to the application ID designated for reporting the owner acquisition (S104). More specifically, a setting file for each rich UI application 25 is stored in the auxiliary storage apparatus 203 of the information processing terminal 20. In each setting file are stored an application ID of the rich UI application 25 related to the setting file and a product ID of the SDK application 124 corresponding to the rich UI application 25 that are collated. Therefore, the application management unit 23 obtains the product ID from a setting file corresponding to an application ID designated for reporting of the owner acquisition. The product ID is identifying information for each SDK application 124.

In step S103, the rich UI application A 251 may designate a product ID of the SDK application 124 corresponding to itself to report the owner acquisition to the application management unit 23. In this case, the rich UI application A 251 may obtain the product ID from its own setting file, or the product ID may be described within the source code of the rich UI application A 251. When the product ID is designated by the rich UI application A 251, step S104 does not have to be executed.

Next, the application management unit 23 designates the obtained product ID to transmit the owner acquisition request on the SDK application 124 (the legacy application A1241) related to the product ID to the SDK platform 123 (S105). The owner acquisition request transmits a request for causing the SDK application 124 related to the designated product ID to acquire the status of the owner (S105) . For the SDK application 124, the status of the owner is a status as an owner of a display area of a screen relative to the operation panel. While omitted in FIG. 6, communications between the application management unit 23 and the SDK platform 123 are conducted via the controller communications unit 22 and the terminal communications unit 1232.

Next, the SDK platform 123 launches a legacy application A 1241 related to the product ID designated in the owner acquisition request (S106). When the legacy application A 1241 is already launched, step S106 is skipped. As one example when the legacy application A 1241 is already launched, a case is included in which a process in FIG. 6 was executed at least once after launching of the image forming apparatus 10.

The launched legacy application A 1241 starts the process of generating its own operation screen, and the display component generated in the generating process is displayed on the touch panel 204 by the mechanism described in FIG. 5; this processing procedure will be described below. At this point, as the mask screen is displayed in the touch panel 204, the respective display components are concealed (covered) by the mask screen, so that they are not visible from the user.

Next, the SDK platform 123 requests the owner acquisition for the legacy application A 1241 to the control service 122 (S107) . This is because the status of the owner of the operation panel is managed by the control service 122 which performs display control on the operation panel.

Then, the SDK platform 123 returns a response indicating success/failure of the owner acquisition of the legacy application A 1241 to the application management unit 23 (S108). The application management unit 23 responds to the rich UI application 25 with information indicating success/failure of the owner acquisition of the legacy application A 1241 (S109).

If the owner acquisition of the legacy application A 1241 succeeds, the rich UI application 25 erases the mask screen (S110). As a result, the operation screen which was generated below the mask screen is displayed. The user may operate the legacy application A 1241 via the operation screen generated by the rich UI application A 251.

Then, when the use of the legacy application A 1241 is completed and instructions to stop the rich UI application A 251 is input by the user, the rich UIOS 21 inputs the stop request to the rich UI application A 251 (S121). In response to the stop request, the rich UI application A 251 ceases to be active. As a result, the operation screen is erased, and a home screen 510 is displayed on the touch panel 204, for example. Next, the rich UI application A 251 reports releasing of the owner (releasing of the status of the owner) to the application management unit 23 (S122).

The legacy application A 1241 is still the owner on the side of the image forming apparatus 10, which is not in alignment with the information processing terminal 20 with respect to the owner. However, steps S101 and beyond are executed when the different rich UI application 25 is activated, so that the SDK application 124 corresponding to the rich UI application 25 becomes the owner, so that the non-alignment is overcome. Moreover, it is not necessary for the image forming apparatus 10 and the information processing terminal 20 to always be synchronized with respect to the owner. Therefore, in the present embodiment, subsequent to step S122, a request to release the owner for the legacy application A 1241 is not transmitted to the SDK platform 123.

Next, details of the process of generating the operation screen in response to launching of the SDK application 124 (the legacy application A1241) in step S105 are described.

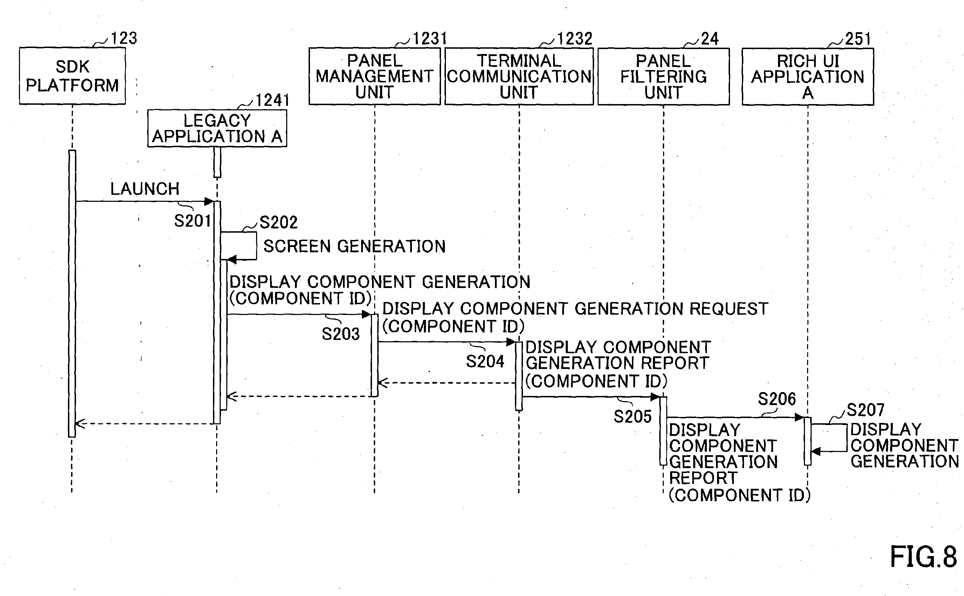

FIG. 8 is a sequence diagram for explaining one example of a processing procedure of a process for generating an operation screen in response to a launch of an SDK application.

In step S201, the SDK platform 123 launches the legacy application A 1241. Step S201 corresponds to step S105 in FIG. 6. The legacy application A 1241 starts the process of generating the operation screen in response to the launching (S202). In the course of the process of generating the operation screen, the legacy application A 1241 requests the panel management unit 1231 to generate the display component for each of the display components as constituting elements of the operation screen. In the request for generating the display component, a component ID as identification information for each separate entity of the display components is designated. The identification information for each separate entity is identifying information whose value differs for each display component even if the type of the display components is the same (for example, even if they are both buttons), for example.

The panel management unit 1231 requests the terminal communication unit 1232 to report on the generating of the display component, including the designated component ID As described in FIG. 5, the panel management unit 1231 requests from the control service 122 the generating of the display component, which is omitted for convenience in FIG. 8.

The terminal communication unit 1232 designates a component ID to transmit a report for the generating of the display component to the panel filtering unit 24 (S205) . In FIG. 8, the controller communication unit 22 is omitted for convenience. The panel filtering unit 24 designates the component ID to report the generating of the display components to the rich UI application A 251 (S206) . The rich UI application A 251 registers, with the panel filtering unit 24, a reporting destination (generally a method or a function, etc., called a listener or a callback) for receiving a report from the panel filtering unit 24 when it is activated, for example. The panel filtering unit 24 reports generating of the display component to the reporting destination to realize reporting of the generation of the display component to the rich UI application A 251.

Next, the rich UI application A 251 generates a display component corresponding to the designated component ID (S207).

It is assumed that the rich UI application A 251 is aware as to what display component the display component related to the component ID is for the legacy application A 1241. For example, the developer of the rich UI application A 251 may be the same person as the developer of the legacy application A 1241, or a person who understands the source code of the legacy application A 1241. Therefore, a developer of the rich UI application A 251 may consider what display component the display component related to the component ID may be represented by on the rich UIOS 21 and determine the display component to generated by the rich UI application A 251 in correspondence with the component ID.

When steps S203 and thereafter are executed for all of the display components which make up the operation screen, the operation screen of the legacy application A 1241 is reproduced on the touch panel 204 of the information processing terminal 20 by the rich UI application A 251.

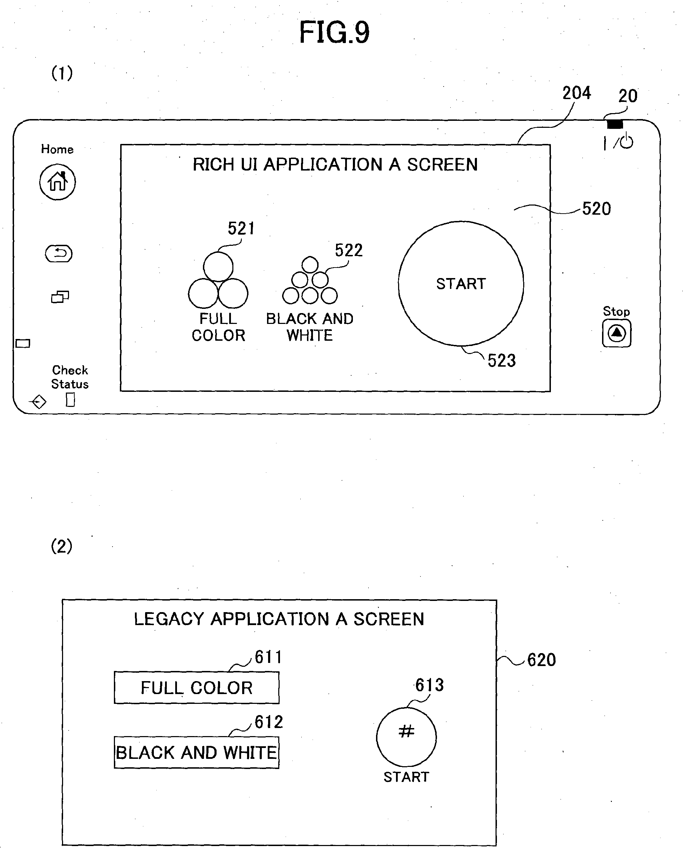

FIG. 9 is a diagram illustrating exemplary displaying of the operation screen. FIG. 9, in (1), shows an exemplary operation screen 520 displayed on the touch panel of the information processing terminal 20. FIG. 9 in (2) shows, just for reference, an example of an operation screen 620 of the legacy application A 1241, which is virtually generated in the image forming apparatus 10.

For example, buttons 621 and 622 in the operation screen 620 are replaced by icons 521 and 522 in the operation screen 520. Moreover, a button 623 in the operation screen 620 is replaced by a button 523 in the operation screen 520. In this way, the rich UI application A 251 may generate a form of display component that is different from the form of the legacy application A 1241 to generate an operation screen which is rich in representations and which has improved ease-of-use.

When viewed from the user, in the home screen 510 in (1) in FIG. 7, touching the icon 511 appears to cause the operation screen to transition as in FIG. 9.

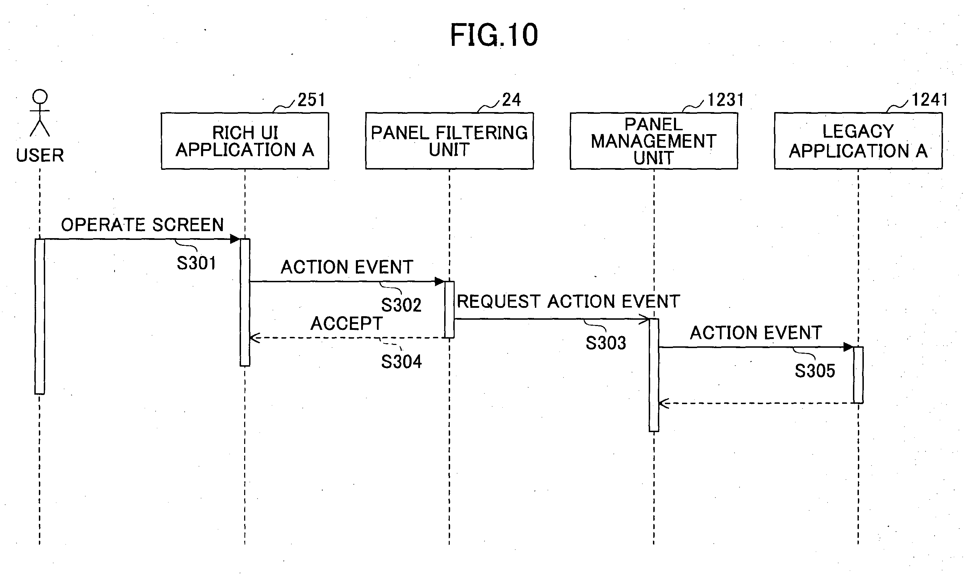

Next, an example of a processing procedure executed in response to an operation of the display component in the operation screen 520 is described. FIG. 10 is a sequence diagram for explaining one example of a processing procedure of a process executed in response to an operation of a displayed component in the operation screen.

For example, in the operation screen 620, when any display component is operated (S301), the rich UI application A 251 reports an action event being information including the content of operations (the type of operations) on the display component and the display component to the panel filtering unit 24 (S302). The panel filtering unit 24 transmits the action event to the panel management unit 1231 (S303) and responds to the rich UI application A 251 of having accepted the action event (S304).

On the other hand, the panel management unit 1231 reports the action event to the legacy application A 1241 of the present owner. The legacy application A 1241 registers, with the panel management unit 1231, a reporting destination (generally a method or a function called "a listener" or "a callback") for receiving a report from the panel management unit 1231 upon becoming an owner, for example. The panel management unit 1231 reports an action event to the reporting destination to realize reporting of the action event to the legacy application A 1241.

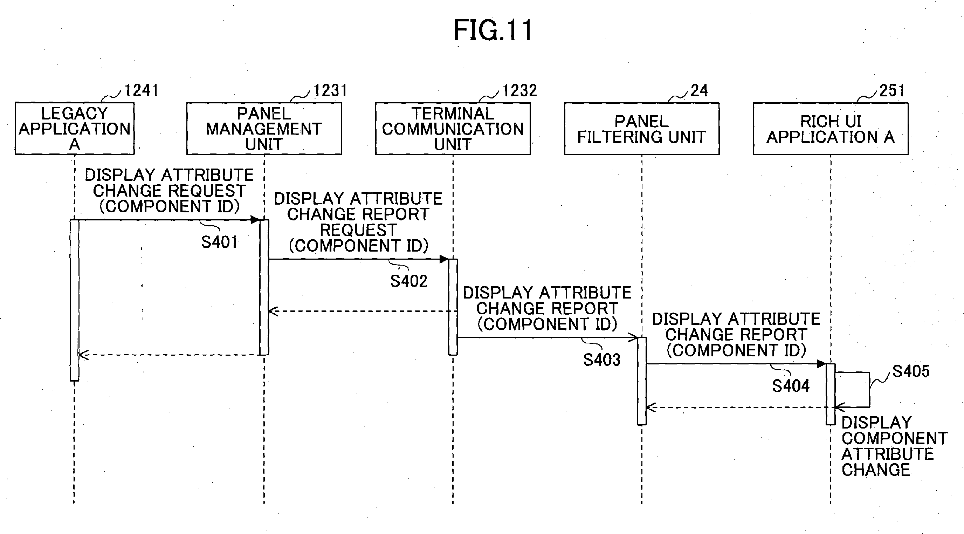

Next, an example of the processing procedure executed in response to the action event is described. FIG. 11 is a sequence diagram for explaining one example of a processing procedure executed in response to the action event.

In step S305, the legacy application A 1241, to which the action event is reported, executes a process in response to the action event. For example, if there is a need to change the display attribute (display status) of the display component to be operated, the legacy application A 1241 designates the component ID of the display component to request changing of the display attribute to the panel management unit 1231 (S401). The action event reported to the legacy application A 1241 in step S305 is an action event indicating an operation on any display component of the operation screen 620 ((2) in FIG. 9), for example. In other words, the legacy application A 1241 does not recognize that the operation screen 520 corresponding to the operation screen 620 is displayed in the information processing terminal 20. Therefore, even for step S401, which is executed in response to step S305, the same process is executed as when the legacy application A 1241 is used in the image forming apparatus having the operation panel.

Next, the panel management unit 1231 provides the terminal communication unit 1232 a display attribute change report request including the designated component ID (S402) . As described in FIG. 5, the panel management unit 1231 requests from the control service 122 the changing in the display attributes, which is omitted in FIG. 11 for convenience.

The terminal communication unit 1232 designates the component ID to transmit the display attribute change report to the panel filtering unit 24 (S403). In FIG. 11, the controller communication unit 22 is omitted for convenience. The panel filtering unit 24 designates the component ID to report the display attribute change report in the same manner as a manner for reporting the generation of the display component to the rich UI application A 251 (S404). The rich UI application A 251 changes the display attribute of the display component corresponding to the designated component ID to the designated status (S405). The changing mode does not necessarily have to be strictly the designated status. When the type of the display component whose display attribute is to be changed differs between the display component in the legacy application A 1241 and the display component in the rich UI application A 251, the change mode of the display attribute could also change.

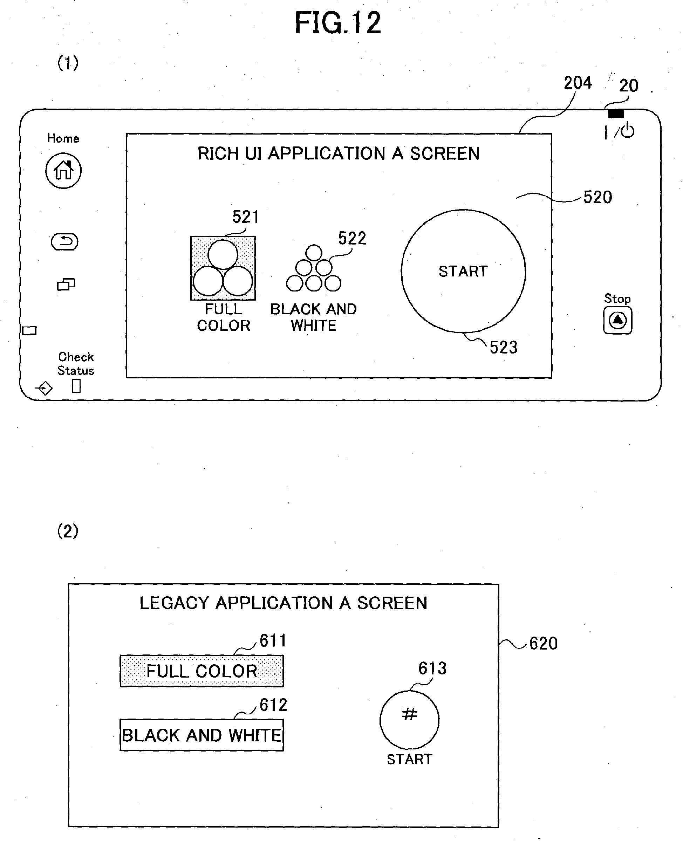

For example, in the operation screen 520 in FIG. 9, when the icon 521 is touched, the legacy application A 1241 is to determine that the icon 521 is to be set to a selected status (for example, reversal displaying). Then, a request for changing the display attribute indicating the selected status that has the component ID of the icon 521 designated is reported to the legacy application A 1241 via the panel management unit 1231, the terminal communication unit 1232, the panel filtering unit 24, etc. Then, the legacy application A 1241 causes the icon 521 to be in the selected status. As a result, the display status of the operation screen 520 becomes as shown in FIG. 12, for example.

FIG. 12 is a diagram illustrating exemplary changing in display states of the operation screen. In the operation screen 520 shown in (1) in FIG. 12, a status in which the icon 521 is selected is shown. As shown in (2) in FIG. 12, also in the operation screen 620 which is virtually generated by the control service 122, the button 621 is recognized to be in the selected status.

When the button 523 is touched in the operation screen 520, steps S301-S305 in FIG. 10 are executed, and the legacy application A 1241 causes the logic for the job implemented in itself to be executed by the image forming apparatus 10. Then, as to whether the button 521 or the button 522 is selected is recognized by the legacy application A 1241 in response to step S305, for example, the legacy application A 1241 may cause a job corresponding to a status in which the button 521 or the button 522 is selected to be executed by the image forming apparatus 10.

Moreover, when there is a need to cause the screen to be transitioned in response to the operation of the display component, steps S202 and beyond in FIG. 8 are executed following step S305. As a result, a new screen is displayed on the touch panel 204.

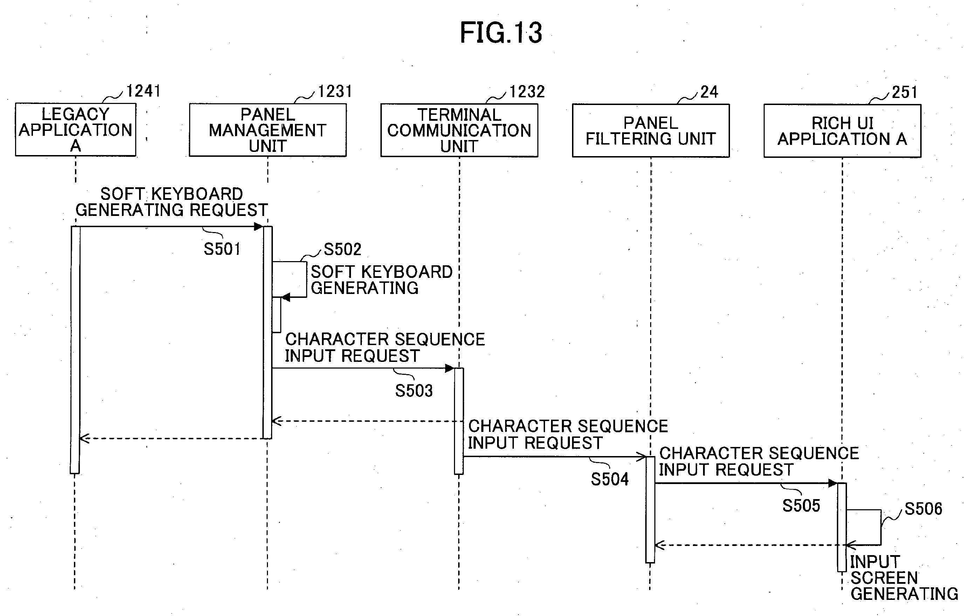

Moreover, when there is a need to cause a transition to a state in which a soft keyboard is displayed and input of a character sequence is accepted in response to the operation of the display component, the processing procedure in FIG. 13 is executed instead of the processing procedure in FIG. 11.

FIG. 13 is a sequence diagram for explaining one example of a processing procedure when causing the soft keyboard to be displayed.

When the legacy application A 1241 determines that there is a need to cause the soft keyboard to be displayed in response to an action event, generation of the soft keyboard is requested to the panel management unit 1231 (S501). The panel management unit 1231 requests the generation of the soft keyboard to the control service 122 (S502). As a result, the image forming apparatus 10 turns to a status in which the soft keyboard is virtually generated.

Next, the panel management unit 1231 inputs a request for inputting a character sequence to the terminal communication unit 1232 (S503) . The terminal communication unit 1232 transmits the request for inputting the character sequence to the panel filtering unit 24 (S504) . In FIG. 13, the controller communication unit 22 is omitted for convenience.

Next, the panel filtering unit 24 reports the request for inputting the character sequence to the rich UI application A 251 (S505) . The rich UI application A 251 generates a screen for inputting the character sequence by the display component which can be generated on the rich UIOS 21 (S506). As a result, the screen for inputting the character sequence is displayed on the touch panel 204. The screen may be a soft keyboard or a different display component.

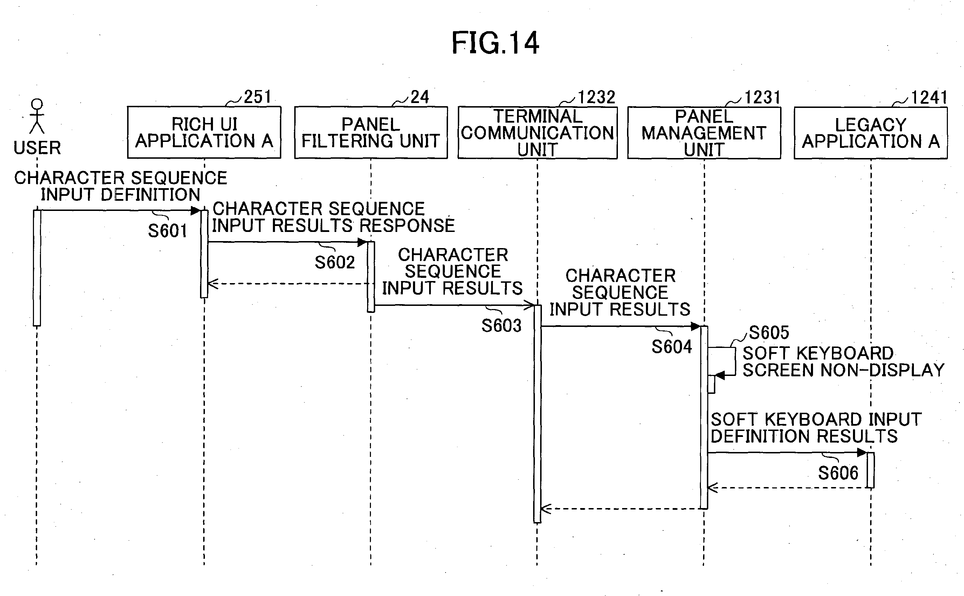

Next, one example is described of a processing procedure which is executed when a character sequence is input by a user in response to step S506. FIG. 14 is a sequence for explaining one example of a processing procedure executed in response to the input of the character sequence.

When the input of the character sequence by the user is defined in the screen for inputting the character sequence displayed on the touch panel 204 (S601), the rich UI application A 251 reports the input results of the character sequence (the input character sequence) to the panel filtering unit 24 (S602). The panel filtering unit 24 transmits input results of the character sequence to the terminal communication unit 1232 (S603). In FIG. 14, the controller communication unit 22 is omitted for convenience.

Next, the terminal communication unit 1232 reports the input results of the character sequence to the panel management unit 1231 (S604). In response to the reporting of the input results of the character sequence, the panel management unit 1231 requests non-displaying of the soft keyboard to the control service 122 (S605). As a result, the soft keyboard which is virtually generated is cancelled. Next, the panel management unit 1231 reports to the legacy application A 1241 input results of the character sequence as results of defining input in the soft keyboard (S606). In other words, the panel management unit 1231 makes it appear to the legacy application A 1241 as if the character sequence is input via the soft keyboard on the operation panel. The legacy application A 1241 stores the reported character sequence as an attribute value of a job, for example.

Next, one example is described of a processing procedure which is executed when a file resource saved in the image forming apparatus 10 (data stored in a file) is needed by the rich UI application A 251. For example, when it is desired to display a list of thumbnail images on the touch panel 204 in an operation screen in which a listing of a file name is displayed in the conventional operation panel, the rich UI application A 251 requires a file resource.

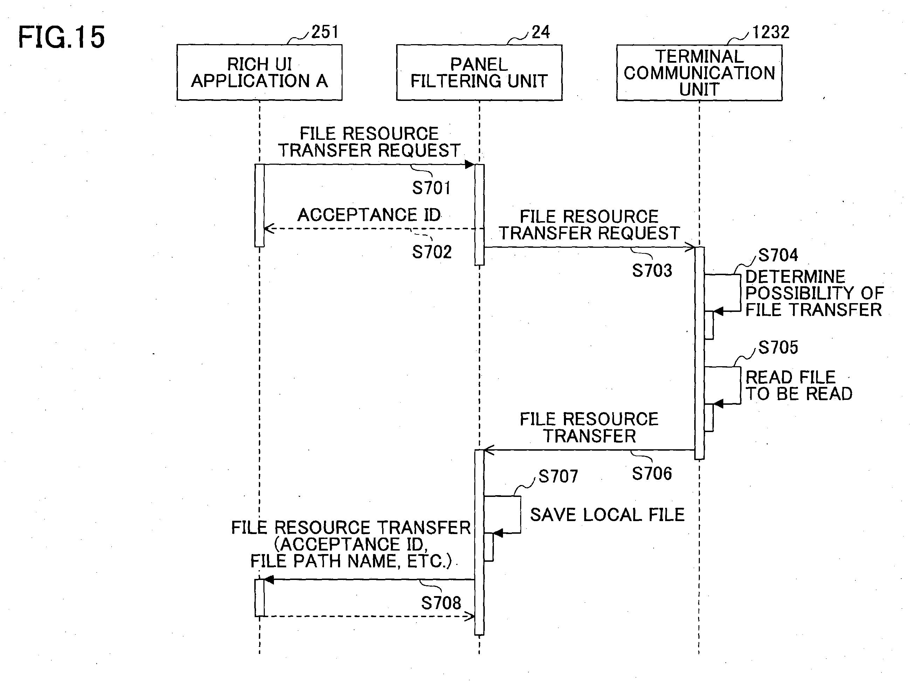

FIG. 15 is a sequence diagram for explaining one example of a processing procedure which is executed when a file resource saved in the image forming apparatus is needed by the rich UI application.

In step S701, the rich UI application A 251 designates a file path name of a file resource needed to request transferring of the file resource to the panel filtering unit 24. The panel filtering unit 24 generates identification information (below called "an acceptance ID") for the request and responds to the rich UI application A 251 with the acceptance ID. As a response (below-described in step S708) of the acceptance ID is performed non-synchronously to a request (S701) for transferring the file resource, the acceptance ID is reported to the rich UI application A 251 in order to make it possible to determine, on the rich UI application A 251 side, whether a response in step S708 corresponds to any request.

Then, the panel filtering unit 24 designates a file path name to transmit a request for transferring the file resource to the terminal communication unit 1232 (S703) . In FIG. 15, the controller communication unit 22 is omitted for convenience.

Then, the terminal communication unit 1232 checks for whether it is possible to transfer a file resource related to a file path name designated for the transferring request. For example, the presence/absence of a file related to the file path name is checked. When it is determined that the file resource can be transferred, the terminal communication unit 1232 reads a file resource from a file related to the file path name designated for the transferring request (S705) . Next, the terminal communication unit 1232 transfers a file resource to the panel filtering unit 24 (S706). The file path names may be collated for each of the file resources to transfer multiple file resources, for example.

When the file resource is received, the panel filtering unit 24 generates a file in the auxiliary storage apparatus 203 of the information processing terminal 20 and the file resource is saved in the file (S707). Next, the panel filtering unit 24 reports file resource transfer results including the acceptance ID, the file path name of the file into which the file resource is saved to the rich UI application A 251 (S708).

The rich UI application A 251 determines which request the file resource transfer results are for based on the acceptance ID. Thereafter, the rich UI application A 251 accesses the file related to the file path name reported.

As described above, according to the present embodiment, the ease of use and the display capability of the operation unit may be improved. Moreover, the effect of changing the operation unit to the information processing terminal 20 is absorbed in the SDK platform 123, the control service 122, etc. Therefore, the necessity of altering the logic portion of the SDK application 124 may be reduced.

In the present embodiment, the legacy application A 1241 is one example of the first processing unit. The SDK platform 123 is one example of the first communication unit. The rich UI application A 251 is one example of the second processing unit. The controller communication unit 22 and the panel filtering unit 24 represent one exemplary second communication unit.

While the embodiment of the present invention has been described above, the present invention is not limited to such a specific embodiment, so that different variations and changes are possible within the scope of the present invention that is recited in the claims.

### DESCRIPTION OF THE REFERENCE NUMERALS

1 Information processing system
10 Image forming apparatus
11 Controller
12 Scanner
13 Printer
14 Modem
15 Terminal interface
16 Network interface
17 SD card slot
20 Information processing terminal
21 Rich UIOS
22 Controller communication unit
23 Application management unit
24 Panel filtering unit
25 Rich UI application A
80 SD card
111 CPU
112 RAM
113 ROM
114 HDD
115 NVRAM
121 OS
122 Control service
123 SDK platform
124 SDK application
201 CPU
202 Memory
203 Auxiliary storage apparatus
204 Touch panel
205 Wireless communication apparatus
206 Equipment interface
211 Display apparatus
212 Input apparatus
251 Rich UI application A
1231 Panel management unit
1232 Terminal communication unit
1241 Legacy application A

### PATENT DOCUMENT

Patent document 1: JP2009-223577A

## Claims

1. An information processing system (1) comprising an equipment unit (10) and an operation unit (20) configured to operate the equipment unit, the equipment unit comprising:
a first processing unit (11) configured to execute a first application program (1241) having a first representation capability for representing constituting elements (611, 612, 613) of an operation screen for a user interface and configured to provide a request for displaying plural constituting elements (611, 612, 613) of the screen in a first form, said first form depending on the first representation capability; and
a first communication unit (123) configured to accept the request and to designate information identifying each respective constituting element to transmit a displaying request (S205) for the constituting elements to the operation unit, wherein
the operation unit (20) includes:
a second communication unit (22, 24) configured to receive the displaying request; and
a second processing unit (201) configured to execute a second application program (251) corresponding to the first application program (1241) and having a second representation capability for representing constituting elements of the operation screen, which is different from the first representation capability and is rich in representations relative to the first representation capability, and configured to cause each constituting element related to the respective identifying information designated in the displaying request received by the second communication unit to be displayed in a second form (521, 522, 523) different from the first form , said second form being an improved form according to the second representation capability.

2. A system (1) as claimed in claim 1, wherein the second processing unit, in response to an operation of causing each constituting element to be displayed, is configured to transmit operation information including information identifying the constituting element and the content of the operation to the first communication unit (123) via the second communication unit (22, 24); wherein
the first communication unit (123) is configured to report the operation information to the first processing unit; and wherein
the first processing unit is configured to execute a process in accordance with the operation information.

3. A system as claimed in claim 2, wherein the first processing unit is configured to transmit to the second communication unit (22, 24) via the first communication unit (123), a request for changing a display status of each respective constituting element related to the identifying information included in the operation information; wherein
the second communication unit (22, 24) is configured to report the request for changing the display status to the second processing unit; and wherein
the second processing unit is configured to cause changing of the display status of the constituting element related to the identifying information, the display status of which constituting element is requested to be changed.

4. A system as claimed in any one of claims 1 to 3, wherein each constituting element is a display component for the first processing unit to cause the equipment unit (10) to execute the process.

5. A system as claimed in any one of claims 1 to 4, wherein
the operation unit (20) can be separated from the equipment unit (10); and wherein
the first communication unit (123) and the second communication unit (22, 24) are configured to communicate via a network.

6. An information processing terminal (20) configured to function as an operation unit of an equipment unit (10), wherein the equipment unit (10) includes:
a first processing unit (11) configured to execute a first application program (1241) having a first representation capability for representing constituting elements (611, 612, 613) of an operation screen for a user interface and configured to provide a request for displaying plural constituting elements (611, 612, 613) of the screen in a first form, said first form depending on the first representation capability; and
a first communication unit (123) configured to accept the request and to designate information identifying each respective constituting element to transmit a displaying request (S205) for the constituting elements to the information processing terminal in the first form; and wherein
the information processing terminal (20) includes:
a second communication unit (22, 24) configured to receive the displaying request; and
a second processing unit (201) configured to execute a second application program (251) corresponding to the first application program (1241) and having a second representation capability for representing constituting elements of the operation screen, which is different from the first representation capability and is rich in representations relative to the first representation capability, and configured to cause each constituting element related to the respective identifying information designated in the displaying request received by the second communication unit to be displayed in a second form (521, 522, 523) different from the first form, said second form being an improved form according to the second representation capability.

7. A method of using an information processing terminal (20) according to claim 6 in a system according to any one of claims 1 to 5, comprising receiving (S205) from the equipment unit (10) the displaying request for each of the constituting elements in the first form,
and causing each constituting element related to the respective identifying information designated in the displaying request to be displayed in a second form (521, 522, 523) different from the first form (611, 612, 613), said second form being an improved form according to the second representation capability.

8. A program which, when executed on an information processing terminal (20) which functions as an operation unit of an equipment unit (10), causes the terminal to perform the method of claim 7.

## Patentansprüche

1. Informationsverarbeitungssystem (1), das eine Ausrüstungseinheit (10) und eine Bedieneinheit (20), die dazu ausgelegt ist, die Ausrüstungseinheit zu betreiben, umfasst, wobei die Ausrüstungseinheit Folgendes umfasst:
eine erste Verarbeitungseinheit (11), die dazu ausgelegt ist, ein erstes Anwendungsprogramm (1241) auszuführen, das eine erste Darstellungsfähigkeit zum Darstellen von konstituierenden Elementen (611, 612, 613) eines Bedienbildschirms für eine Benutzerschnittstelle aufweist, und dazu ausgelegt, eine Anforderung zum Anzeigen mehrerer konstituierender Elemente (611, 612, 613) des Bildschirms in einer ersten Form bereitzustellen, wobei die erste Form von der ersten Darstellungsfähigkeit abhängig ist; und
eine erste Kommunikationseinheit (123), die dazu ausgelegt ist, die Anforderung zu akzeptieren und Informationen, die jedes jeweilige konstituierende Element identifizieren, zu bestimmen, um eine Anzeigeanforderung (S205) für die konstituierenden Elemente zur Bedieneinheit zu übertragen, wobei
die Bedieneinheit (20) Folgendes beinhaltet:
eine zweite Kommunikationseinheit (22, 24), die dazu ausgelegt ist, die Anzeigeanforderung zu empfangen; und
eine zweite Verarbeitungseinheit (201), die dazu ausgelegt ist, ein zweites Anwendungsprogramm (251) auszuführen, das dem ersten Anwendungsprogramm (1241) entspricht und eine zweite Darstellungsfähigkeit zum Darstellen von konstituierenden Elementen des Bedienbildschirms aufweist, die sich von der ersten Darstellungsfähigkeit unterscheidet und relativ zur ersten Darstellungsfähigkeit reich an Darstellungen ist, und dazu ausgelegt zu bewirken, dass jedes konstituierende Element, das mit den jeweiligen Identifikationsinformationen verknüpft ist, die in der Anzeigeanforderung bestimmt sind, die von der zweiten Kommunikationseinheit empfangen wurden, in einer zweiten Form (521, 522, 523), die sich von der ersten Form unterscheidet, angezeigt wird, wobei die zweite Form eine verbesserte Form gemäß der zweiten Darstellungsfähigkeit ist.

2. System (1) wie in Anspruch 1 beansprucht, wobei die zweite Verarbeitungseinheit als Reaktion auf eine Operation des Bewirkens, dass jedes konstituierende Element angezeigt wird, dazu ausgelegt ist, Bedieninformationen, die Informationen beinhalten, die das konstituierende Element identifizieren, und den Inhalt der Operation via die zweite Kommunikationseinheit (22, 24) zur ersten Kommunikationseinheit (123) zu übertragen; wobei
die erste Kommunikationseinheit (123) dazu ausgelegt ist, die Bedieninformationen an die erste Verarbeitungseinheit zu melden; und wobei
die erste Verarbeitungseinheit dazu ausgelegt ist, einen Prozess gemäß der Bedieninformationen auszuführen.

3. System wie in Anspruch 2 beansprucht, wobei die erste Verarbeitungseinheit dazu ausgelegt ist, eine Anforderung zum Ändern eines Anzeigestatus jedes jeweiligen konstituierenden Elements, das mit den Identifikationsinformationen verknüpft ist, die in den Bedieninformationen beinhaltet sind, via die erste Kommunikationseinheit (123) zur zweiten Kommunikationseinheit (22, 24) zu übertragen; wobei
die zweite Kommunikationseinheit (22, 24) dazu ausgelegt ist, die Anforderung zum Ändern des Anzeigestatus der zweiten Verarbeitungseinheit zu melden; und wobei
die zweite Verarbeitungseinheit dazu ausgelegt ist, das Ändern des Anzeigestatus des konstituierenden Elements, das mit den Identifikationsinformationen verknüpft ist, zu bewirken, wobei eine Änderung des Anzeigestatus des konstituierenden Elements angefordert wird.

4. System wie in einem der Ansprüche 1 bis 3 beansprucht, wobei jedes konstituierende Element eine Anzeigekomponente für die erste Verarbeitungseinheit ist, um zu bewirken, dass die Ausrüstungseinheit (10) den Prozess ausführt.

5. System wie in einem der Ansprüche 1 bis 4 beansprucht, wobei
die Bedieneinheit (20) von der Ausrüstungseinheit (10) getrennt werden kann und wobei
die erste Kommunikationseinheit (123) und die zweite Kommunikationseinheit (22, 24) dazu ausgelegt sind, via ein Netzwerk zu kommunizieren.

6. Informationsverarbeitungsendgerät (20), das dazu ausgelegt ist, als eine Bedieneinheit einer Ausrüstungseinheit (10) zu fungieren, wobei die Ausrüstungseinheit (10) Folgendes beinhaltet:
eine erste Verarbeitungseinheit (11), die dazu ausgelegt ist, ein erstes Anwendungsprogramm (1241) auszuführen, das eine erste Darstellungsfähigkeit zum Darstellen von konstituierenden Elementen (611, 612, 613) eines Bedienbildschirms für eine Benutzerschnittstelle aufweist, und dazu ausgelegt, eine Anforderung zum Anzeigen mehrerer konstituierender Elemente (611, 612, 613) des Bildschirms in einer ersten Form bereitzustellen, wobei die erste Form von der ersten Darstellungsfähigkeit abhängig ist; und
eine erste Kommunikationseinheit (123), die dazu ausgelegt ist, die Anforderung zu akzeptieren und Informationen, die jedes jeweilige konstituierende Element identifizieren, zu bestimmen, um eine Anzeigeanforderung (S205) für die konstituierenden Elemente in der ersten Form zum Informationsverarbeitungsendgerät zu übertragen; und wobei
das Informationsverarbeitungsendgerät (20) Folgendes beinhaltet:
eine zweite Kommunikationseinheit (22, 24), die dazu ausgelegt ist, die Anzeigeanforderung zu empfangen; und
eine zweite Verarbeitungseinheit (201), die dazu ausgelegt ist, ein zweites Anwendungsprogramm (251) auszuführen, das dem ersten Anwendungsprogramm (1241) entspricht und eine zweite Darstellungsfähigkeit zum Darstellen von konstituierenden Elementen des Bedienbildschirms aufweist, die sich von der ersten Darstellungsfähigkeit unterscheidet und relativ zur ersten Darstellungsfähigkeit reich an Darstellungen ist, und dazu ausgelegt zu bewirken, dass jedes konstituierende Element, das mit den jeweiligen Identifikationsinformationen verknüpft ist, die in der Anzeigeanforderung bestimmt sind, die von der zweiten Kommunikationseinheit empfangen wurden, in einer zweiten Form (521, 522, 523), die sich von der ersten Form unterscheidet, angezeigt wird, wobei die zweite Form eine verbesserte Form gemäß der zweiten Darstellungsfähigkeit ist.

7. Verfahren zum Verwenden eines Informationsverarbeitungsendgeräts (20) nach Anspruch 6 in einem System nach einem der Ansprüche 1 bis 5, das das Empfangen (S205) der Anzeigeanforderung für jedes der konstituierenden Elemente in der ersten Form von der Ausrüstungseinheit (10) und das Bewirken, dass jedes konstituierende Element, das mit den jeweiligen Identifikationsinformationen verknüpft ist, die in der Anzeigeanforderung bestimmt sind, in einer zweiten Form (521, 522, 523) angezeigt wird, die sich von der ersten Form (611, 612, 613) unterscheidet, umfasst, wobei die zweite Form eine verbesserte Form gemäß der zweiten Darstellungsfähigkeit ist.

8. Programm, das, wenn es auf einem Informationsverarbeitungsendgerät (20) ausgeführt wird, das als eine Bedieneinheit einer Ausrüstungseinheit (10) fungiert, bewirkt, dass das Endgerät das Verfahren nach Anspruch 7 durchführt.

## Revendications

1. Système de traitement d'informations (1) comprenant une unité d'équipement (10), et une unité d'exploitation (20) configurée de manière à faire fonctionner l'unité d'équipement, l'unité d'équipement comprenant :
une première unité de traitement (11) configurée de manière à exécuter un premier programme d'application (1241) présentant une première capacité de représentation pour représenter des éléments constitutifs (611, 612, 613) d'un écran de fonctionnement pour une interface d'utilisateur, et configurée de manière à fournir une demande pour afficher plusieurs éléments constitutifs (611, 612, 613) de l'écran dans une première forme, ladite première forme dépendant de la première capacité de représentation ; et
une première unité de communication (123) configurée de manière à accepter la demande et à désigner des informations identifiant chaque élément constitutif respectif pour transmettre une demande d'affichage (S205) concernant les éléments constitutifs, à l'unité d'exploitation, dans lequel
l'unité d'exploitation (20) inclut :
une seconde unité de communication (22, 24) configurée de manière à recevoir la demande d'affichage ; et
une seconde unité de traitement (201) configurée de manière à exécuter un second programme d'application (251) correspondant au premier programme d'application (1241), et présentant une seconde capacité de représentation en vue de représenter des éléments constitutifs de l'écran de fonctionnement, laquelle est différente de la première capacité de représentation et est enrichie de représentations par rapport à la première capacité de représentation, et configurée de manière à amener chaque élément constitutif connexe aux informations d'identification respectives désignées dans la demande d'affichage reçue par la seconde unité de communication à être affiché dans une seconde forme (521, 522, 523), différente de la première forme, ladite seconde forme étant une forme améliorée selon la seconde capacité de représentation.

2. Système (1) selon la revendication 1, dans lequel la seconde unité de traitement, en réponse à une opération consistant à amener chaque élément constitutif à être affiché, est configurée de manière à transmettre des informations de fonctionnement incluant des informations identifiant l'élément constitutif et le contenu de l'opération, à la première unité de communication (123), par l'intermédiaire de la seconde unité de communication (22, 24) ; dans lequel
la première unité de communication (123) est configurée de manière à signaler les informations de fonctionnement à la première unité de traitement ; et dans lequel
la première unité de traitement est configurée de manière à exécuter un processus conformément aux informations de fonctionnement.

3. Système selon la revendication 2, dans lequel la première unité de traitement est configurée de manière à transmettre, à la seconde unité de communication (22, 24), par l'intermédiaire de la première unité de communication (123), une demande visant à modifier un état d'affichage de chaque élément constitutif respectif connexe aux informations d'identification incluses dans les informations de fonctionnement ; dans lequel
la seconde unité de communication (22, 24) est configurée de manière à signaler la demande de modification de l'état d'affichage à la seconde unité de traitement ; et dans lequel
la seconde unité de traitement est configurée de manière à occasionner la modification de l'état d'affichage de l'élément constitutif connexe aux informations d'identification, pour lequel l'état d'affichage de l'élément constitutif doit être modifié.

4. Système selon l'une quelconque des revendications 1 à 3, dans lequel chaque élément constitutif est un composant d'affichage permettant à la première unité de traitement d'amener l'unité d'équipement (10) à exécuter le processus.

5. Système selon l'une quelconque des revendications 1 à 4, dans lequel :
l'unité d'exploitation (20) peut être séparée de l'unité d'équipement (10) ; et dans lequel
la première unité de communication (123) et la seconde unité de communication (22, 24) sont configurées de manière à communiquer par l'intermédiaire d'un réseau.

6. Terminal de traitement d'informations (20) configuré de manière à fonctionner en tant qu'une unité d'exploitation d'une unité d'équipement (10), dans lequel l'unité d'équipement (10) inclut :
une première unité de traitement (11) configurée de manière à exécuter un premier programme d'application (1241) présentant une première capacité de représentation pour représenter des éléments constitutifs (611, 612, 613) d'un écran de fonctionnement pour une interface d'utilisateur, et configurée de manière à fournir une demande pour afficher plusieurs éléments constitutifs (611, 612, 613) de l'écran dans une première forme, ladite première forme dépendant de la première capacité de représentation ; et
une première unité de communication (123) configurée de manière à accepter la demande et à désigner des informations identifiant chaque élément constitutif respectif pour transmettre une demande d'affichage (S205) concernant les éléments constitutifs, au terminal de traitement d'informations, dans la première forme ; dans lequel
le terminal de traitement d'informations (20) inclut :
une seconde unité de communication (22, 24) configurée de manière à recevoir la demande d'affichage ; et
une seconde unité de traitement (201) configurée de manière à exécuter un second programme d'application (251) correspondant au premier programme d'application (1241), et présentant une seconde capacité de représentation en vue de représenter des éléments constitutifs de l'écran de fonctionnement, laquelle est différente de la première capacité de représentation et est enrichie de représentations par rapport à la première capacité de représentation, et configurée de manière à amener chaque élément constitutif connexe aux informations d'identification respectives désignées dans la demande d'affichage reçue par la seconde unité de communication à être affiché dans une seconde forme (521, 522, 523), différente de la première forme, ladite seconde forme étant une forme améliorée selon la seconde capacité de représentation.

7. Procédé d'utilisation d'un terminal de traitement d'informations (20) selon la revendication 6, dans un système selon l'une quelconque des revendications 1 à 5, comprenant l'étape consistant à recevoir (S205), en provenance de l'unité d'équipement (10), la demande d'affichage pour chacun des éléments constitutifs, dans la première forme, et l'étape consistant à amener chaque élément constitutif connexe aux informations d'identification respectives désignées dans la demande d'affichage à être affiché dans une seconde forme (521, 522, 523), différente de la première forme (611, 612, 613), ladite seconde forme étant améliorée selon la seconde capacité de représentation.

8. Programme qui, lorsqu'il est exécuté sur un terminal de traitement d'informations (20) qui fonctionne en tant qu'une unité d'exploitation d'une unité d'équipement (10), amène le terminal à mettre en oeuvre le procédé selon la revendication 7.
